# EUROPÄISCHE PATENTSCHRIFT

(11) **EP 3 455 495 B1**
(45) Veröffentlichungstag und Bekanntmachung des Hinweises auf die Patenterteilung: **16.06.2021**
(21) Anmeldenummer: 17722757.6
(22) Anmeldetag: 10.05.2017
(51) Int. Cl.: F03G 7/06, G05G 1/02, G05G 5/06, H01L 41/09

(54) **BISTABILE AKTORVORRICHTUNG MIT EINEM FORMGEDÄCHTNISELEMENT**
BISTABLE ACTUATOR DEVICE HAVING A SHAPE MEMORY ELEMENT
DISPOSITIF ACTIONNEUR BISTABLE COMPRENANT UN ÉLÉMENT À MÉMOIRE DE FORME

(30) Priorität: 10.05.2016 DE 102016108627
(43) Veröffentlichungstag der Anmeldung: 20.03.2019
(73) Patentinhaber: Universität des Saarlandes, 66123 Saarbrücken (DE); ZeMA-Zentrum für Mechatronik und Automatisierungstechnik gGmbH, 66121 Saarbrücken (DE)
(72) Erfinder: MOTZKI, Paul, 66127 Saarbrücken (DE); SEELECKE, Prof. Stefan, 66119 Saarbrücken (DE)
(74) Vertreter: Banse & Steglich Patentanwälte PartmbB
(86) Internationale Anmeldenummer: PCT/EP2017/061157
(87) Internationale Veröffentlichungsnummer: WO 2017/194591

(56) Entgegenhaltungen:
- FR-A1- 2 973 578
- JP-A- 2014 026 749
- US-A- 5 977 858
- US-A1- 2006 201 149
- US-A1- 2013 081 933

## Beschreibung

### Technisches Gebiet

Die Erfindung betrifft Aktorvorrichtungen, insbesondere eine Aktorvorrichtung mit einem bistabilen Element, das durch eine Verformung eines Aktorelements aus einem Formgedächtnismaterial in einen veränderten bistabilen Zustand bezüglich seiner Form, Ausrichtung und/oder Stellung gebracht werden kann.

### Technischer Hintergrund

Formgedächtnismaterialien werden in vielfältiger Weise bereits für Aktorvorrichtungen genutzt. Insbesondere wird bei vielen Aktorvorrichtungen eine Kraft genutzt, die aus einer Längenreduzierung eines zuvor gestreckten Drahtes aus Formgedächtnismaterial (Formgedächtnisdraht) bei Einwirkung von Wärme entsteht. Für derartige Drähte muss jedoch immer eine Rückstellkraft existieren, um den durch thermische Aktivierung verkürzten Draht wieder in seine vorherige Länge zu dehnen. Dies geschieht häufig durch eine Federkraft, durch die Kraft eines aktivierten weiteren Formgedächtnisdrahtes oder durch eine Gewichtskraft einer Masse.

Insbesondere bei Aktorvorrichtungen mit einem Formgedächtnisdraht als Aktorelement und mit einer Rückstellfeder kann eine bestimmte Stellung der Aktorvorrichtung durch das Aktorelement nur gehalten werden, solange eine entsprechende Aktivierungstemperatur des Formgedächtnisdrahts beibehalten wird. Dies erfolgt in der Regel durch Bestromung des Formgedächtnisdrahtes. Soll die Aktorvorrichtung längere Zeit in dieser Stellung gehalten werden, kann dies sehr energieaufwändig werden, da die höhere Temperatur des Formgedächtnisdrahtes aufrechterhalten werden muss.

Bei einer solchen Aktorvorrichtung wirkt die Rückstellkraft der Rückstellfeder dauerhaft auf den Formgedächtnisdraht; dies kann aufgrund der dauerhaften Belastung zu kritischen Spannungen und beschleunigter Alterung des Formgedächtnisdrahtes führen. Weiterhin wird zum Erreichen von nennenswerten Auslenkungen durch den Formgedächtnisdraht ein großer Bauraum benötigt, da die erreichbare Auslenkung von der Länge des Formgedächtnisdrahtes abhängt.

Um diese Nachteile zu vermeiden, kann eine Aktorvorrichtung vorgesehen werden, die bistabile Aktorstellungen einnehmen kann, ohne dass in einer der Aktorstellungen eine dauerhafte Belastung auf ein Aktorelement ausgeübt wird. Dazu sieht die Druckschrift DE 10 2012 217 246 A1 eine bistabile Vorrichtung vor, bei der eine elastisch verformbare Platte zwischen Befestigungselementen angeordnet ist. Die Platte ist durch Ausüben einer Druckkraft in eine von zwei stabilen verformten Stellungen verformbar, wobei die Druckkraft mit Hilfe eines Formgedächtnislegierungs- oder Piezoaktorelements ausgeübt werden kann.

Aus der Druckschrift US 5,977,858 ist ein Aktuator mit einem Gehäuse bekannt, in dem eine Blattfeder angeordnet ist. Die Blattfeder ist mit zwei Formgedächtnisdrähten verbunden, die die Blattfeder bei deren Aktivierung in eine erste Stellung bzw. in eine zweite Stellung bewegen.

Die Druckschrift US 2013/081933 A1 offenbart eine elektrothermische Aktorvorrichtung mit einem beweglichen Element, das zwischen einer ersten und einer zweiten bistabilen Position beweglich ist. Durch Bestromen nur eines Teils von mehreren Formgedächtnisdrähten kann das bewegliche Element von einer Position in die andere gebracht werden.

Es ist Aufgabe der vorliegenden Erfindung, eine Aktorvorrichtung zur Verfügung zu stellen, bei der ein Biegeelement in mindestens zwei Aktorstellungen bistabil verformbar ist, wobei die Aktorelemente aus Formgedächtnismaterialien im nicht aktivierten Zustand keiner dauerhaften Belastung unterliegen. Weiterhin soll bereits mit geringen Aktorhüben ein Umschalten des Aktorelements erreicht werden.

### Beschreibung von Ausführungsformen

Diese Aufgabe wird durch die Aktorvorrichtung nach Anspruch 1 sowie das Verfahren zum Betreiben einer Aktorvorrichtung gemäß dem nebengeordneten Anspruch gelöst.

Weitere Ausgestaltungen sind in den abhängigen Ansprüchen angegeben.

Gemäß einem ersten Aspekt ist eine Aktorvorrichtung zum Bereitstellen von mindestens zwei Aktorstellungen vorgesehen; umfassend:
- ein bistabiles elastisches Biegeelement, das zumindest an einem Befestigungspunkt so gehalten ist, dass durch Ausüben eines Schaltmoments an dem Befestigungspunkt eine elastische Verformung des Biegeelements zu einem Wechsel von einer ersten Aktorstellung in eine zweite Aktorstellung führt, die jeweils eine bistabile Stellung des Biegeelements darstellen;
- mindestens ein Aktorelement, das mit einem Formgedächtnisdraht ausgebildet ist, wobei der Formgedächtnisdraht durch Erwärmen eine Zugkraft bewirkt und so mit einem Abschnitt des Biegeelements an dem Befestigungspunkt gekoppelt ist, dass durch die Zugkraft das Schaltmoment an dem Befestigungspunkt bewirkt wird, um das Biegeelement von der ersten Aktorstellung in die zweite Aktorstellung zu bewegen.
Das Biegeelement ist an mindestens einem von mehreren Befestigungspunkten schwenkbar um eine Drehachse, z.B. an einer Welle oder einer Achse, gelagert, wobei an dem einen Befestigungspunkt mindestens ein Aktorelement insbesondere an einem an der Welle oder der Achse angeordneten, insbesondere quer bzw. senkrecht, d.h. schräg oder rechtwinklig zu der Drehachse, abstehenden Zugschenkel angreift, so dass durch Ausüben einer Zugkraft auf den Zugschenkel eine Kraftkomponente rechtwinklig zu der axialen Richtung wirkt und durch eines der Aktorelemente das Schaltmoment an dem betreffenden Befestigungspunkt um die Drehachse ausgeübt wird.

Insbesondere kann ein weiteres Aktorelement so mit einem Abschnitt des Biegeelements an dem Befestigungspunkt gekoppelt sein, dass durch die Zugkraft ein Schaltmoment an dem oder einem weiteren Befestigungspunkt bewirkt wird, um das Biegeelement von der zweiten Aktorstellung in die erste Aktorstellung zu bewegen.

Eine Idee der obigen Aktorvorrichtung besteht darin, ein bistabiles elastisches Biegeelement vorzusehen, das an mindestens einem Abschnitt schwenkbar an mindestens einer Schwenkachse gehalten ist und durch eigene Verformung eine Biegespannung ausüben kann. Das Biegeelement ist bezüglich der Schwenkachse so angeordnet, dass dieses sich gegen das Wirken einer rückstellenden Biegespannung in einer ersten oder einer davon verschiedenen zweiten Aktorstellung hält, die jeweils eine bistabile Stellung des Biegeelements darstellen. Um das Biegeelement von der ersten Aktorstellung in die zweite Aktorstellung zu bringen oder umgekehrt, wird ein Schaltmoment an der Schwenkachse auf das Biegeelement in einer ersten Richtung bzw. in einer zweiten Richtung ausgeübt. Die Schaltmomente werden durch jeweils ein oder mehrere mit einem Formgedächtnisdraht ausgebildeten Aktorelementen bewirkt, deren Längen sich bei entsprechender Aktivierung verkürzen und die dadurch eine Zugkraft ausüben können. im nicht aktivierten Zustand können das eine oder die mehreren Aktorelemente durch Ausüben einer längenden Kraft gedehnt werden.

Eine solche Aktorvorrichtung hat den Vorteil, dass damit bistabile/multistabile Aktorstellungen bereitgestellt werden können, die lediglich durch das Ausüben von Zugkräften eingenommen werden können. Die Zugkräfte können in besonders einfacher Weise durch Formgedächtnisdrähte bereitgestellt werden. Eine solche Aktorvorrichtung ist insbesondere ohne rückstellende Federkräfte oder Gewichtskräfte realisierbar.

Weiterhin kann das elastische Biegeelement aus einem elastischen metallischen Material ausgebildet sein, wobei das Biegeelement zwischen dem ersten Befestigungspunkt und einem zweiten Befestigungspunkt mit einer Länge angeordnet ist, die größer ist als der Abstand zwischen dem ersten Befestigungspunkt und dem zweiten Befestigungspunkt.

Gemäß einer Ausführungsform kann das Biegeelement an mindestens einem von mehreren Befestigungspunkten schwenkbar gelagert sein, wobei an dem Biegeelement mehrere Zugpunkte vorgesehen sind, an denen jeweils ein oder mehrere Aktorelemente angreifen, um die Zugkraft zu bewirken.

Insbesondere können zwei Zugpunkte an mindestens einem der mehreren Befestigungspunkte an bezüglich des betreffenden Befestigungspunktes gegenüberliegenden Abschnitten des Biegeelements angeordnet sein, so dass durch Ausüben einer Zugkraft durch eines der Aktorelemente ein erstes Schaltmoment an dem betreffenden Befestigungspunkt auf das Biegeelement ausgeübt wird und durch Ausüben einer Zugkraft durch ein weiteres der Aktorelemente ein zweites dem ersten Schaltmoment entgegengesetztes Schaltmoment an dem betreffenden Befestigungspunkt auf das Biegeelement ausgeübt wird.

Weiterhin kann ein gemeinsamer Zugpunkt an mindestens einem der mehreren Befestigungspunkte angeordnet sein, von dem ausgehend sich mehrere Aktorelemente in verschiedene, insbesondere entgegengesetzte Richtungen erstrecken, so dass durch Ausüben einer Zugkraft durch eines der Aktorelemente ein erstes Schaltmoment an dem betreffenden Befestigungspunkt auf das Biegeelement ausgeübt wird und durch Ausüben einer Zugkraft durch ein weiteres der Aktorelemente ein zweites dem ersten Schaltmoment entgegengesetzten Schaltmoment an dem betreffenden Befestigungspunkt auf das Biegeelement ausgeübt wird.

Die Zugpunkte sind an bezüglich der Befestigung des Biegeelements gegenüberliegende Abschnitten an dem Biegeelement angebracht, um bei abwechselnder Aktivierung eine Zugkraft in die gleiche Querrichtung bezüglich des Biegeelements auszuüben, wodurch dieses in die erste oder die zweite Aktorstellung verbracht wird.

Dadurch können die Aktorelemente an Zugpunkten des Biegeelements angeordnet werden, wodurch keine zusätzlichen Bauteile zum Umwandeln der Zugkräfte in Schaltmomente notwendig sind. Insbesondere kann so gleichzeitig erreicht werden, dass die Zugkräfte der Aktorelemente zum Umschalten zwischen den Aktorstellungen in die gleiche Richtung ausgeübt werden. Dies ermöglicht einen platzsparenden Aufbau der Aktorvorrichtung, wobei die beiden Aktorelemente im Wesentlichen parallel zueinander angeordnet werden können.

Weiterhin können die Zugpunkte jeweils mit einem Abstand an dem Biegeelement angeordnet sein, der zwischen 0,5 und 25 %, vorzugsweise zwischen 1% und 20%, weiter bevorzugt zwischen 2% und 5% der Länge des Biegeelements zwischen den Befestigungspunkten entspricht. Der Abstand der Zugpunkte von einem zugeordneten Befestigungspunkt kann so gewählt sein, dass der Hub eines Stellelements, der durch die Verstellung zwischen den Aktorstellungen erreicht wird, um einen Faktor von mindestens 5, vorzugsweise mindestens 10, größer ist als der Hub, der an dem Zugpunkt zum Wechsel zwischen den Aktorstellungen benötigt wird.

Durch die Anordnung der Zugpunkte relativ nahe an dem Befestigungspunkt, an dem das Biegeelement schwenkbar gelagert ist, kann durch einen geringen Aktorhub bereits ein hohes Schaltmoment für eine bistabile Verformung des Biegeelements ausgelöst werden, so dass es möglich ist, als Aktorelement relativ kurze Formgedächtnisdrähte zu verwenden, die einen geringen Hub aufweisen. Auch dies ermöglicht eine möglichst kompakte Ausführung einer solchen Aktorvorrichtung, da die Länge des Formgedächtnisdrahtes gegenüber bekannten Formgedächtnisaktoren erheblich reduziert werden kann.

Es kann vorgesehen sein, dass die Aktorelemente sich quer bzw. senkrecht, d.h. schräg oderrechtwinklig zu der Verbindungsstrecke zwischen den Befestigungspunkten erstrecken, so dass auf das Biegeelement eine Kraftkomponente rechtwinklig zu der Verbindungsstrecke zwischen den Befestigungspunkten ausgeübt wird, und an ihren den Zugpunkten gegenüberliegenden Enden an einem ortsfesten Bauteil, z.B. einem Gehäuse oder dergleichen, gehalten sind.

Insbesondere kann sich der mindestens eine Zugschenkel im Wesentlichen quer bzw. senkrecht, d.h. schräg oder rechtwinklig zu dem Biegeelement und das mindestens eine Aktorelement schräg oder im Wesentlichen parallel zu einer Verbindungsstrecke zwischen zwei der mehreren Befestigungspunkte erstrecken.

Es kann vorgesehen sein, dass das Biegeelement an mindestens einem von mehreren Befestigungspunkten schwenkbar gelagert ist, wobei an dem Biegeelement ein gemeinsamer Zugpunkt an dem mindestens einen Befestigungspunkt vorgesehen ist, wobei an dem gemeinsamen Zugpunkt mehrere Aktorelemente angreifen, wobei der gemeinsame Zugpunkt so an dem mindestens einen Befestigungspunkt des Biegeelements angeordnet ist, so dass durch Ausüben einer Zugkraft durch eines der mehreren Aktorelemente ein erstes Schaltmoment an dem mindestens einen Befestigungspunkt auf das Biegeelement ausgeübt wird und durch Ausüben einer Zugkraft durch ein weiteres der mehreren Aktorelemente ein zweites dem ersten Schaltmoment entgegengesetzten Schaltmoment an dem mindestens einen Befestigungspunkt auf das Biegeelement ausgeübt wird.

Weiterhin kann das Biegeelement an vier Befestigungspunkten schwenkbar um eine jeweilige Drehachse, z.B. an einer jeweiligen Welle oder an einer jeweiligen Achse, gelagert sein, wobei mindestens eines der Aktorelemente zwischen zwei Zugpunkten an Zugschenkeln verschiedener in Umfangsrichtung der flächigen Erstreckung des Biegeelement benachbarten Befestigungspunkte angebracht ist, so dass durch Ausüben einer Zugkraft durch das mindestens eine Aktorelement zueinander entgegengesetzt gerichtete Schaltmomente an den durch das mindestens eine Aktorelement miteinander verbundenen Befestigungspunkten um die Drehachse ausgeübt werden.

Es kann vorgesehen sein, dass mindestens eines der als Formgedächtnisdraht ausgebildete Aktorelement die Zugspunkte in in Umfangsrichtung des Biegeelements umlaufender Weise miteinander verbindet.

Gemäß einer weiteren Ausführungsform kann das Biegeelement an mindestens einem von mehreren Befestigungspunkten schwenkbar gelagert sein, wobei an dem Biegeelement ein gemeinsamer Zugpunkt an dem mindestens einen Befestigungspunkt vorgesehen ist, wobei an dem gemeinsamen Zugpunkt mehrere Aktorelemente angreifen, wobei der gemeinsame Zugpunkt so an dem mindestens einen Befestigungspunkt des Biegeelements angeordnet ist, so dass durch Ausüben einer Zugkraft durch eines der mehreren Aktorelemente ein erstes Schaltmoment an dem mindestens einen Befestigungspunkt auf das Biegeelement ausgeübt wird und durch Ausüben einer Zugkraft durch ein weiteres der mehreren Aktorelemente ein zweites dem ersten Schaltmoment entgegengesetzten Schaltmoment an dem mindestens einen Befestigungspunkt auf das Biegeelement ausgeübt wird.

Weiterhin können die mindestens zwei Aktorelemente als Antagonist-Protagonist-Anordnung so ausgelegt sind, dass bei Ausüben einer Zugkraft durch eines der Aktorelemente, das jeweils andere Aktorelement gedehnt wird.

Gemäß einer Ausführungsform kann das mindestens eine Aktorelement so mit einer elektrischen Stromquelle verbunden sein, um eine Erwärmung durch Bestromung zu erreichen.

Gemäß einem weiteren Aspekt kann ein Verfahren zum Betreiben der obigen Aktorvorrichtung mit mindestens zwei Aktorelementen vorgesehen sein, wobei der Formgedächtnisdraht der Aktorelements zum Ausüben des Schaltmoments wechselweise erwärmt wird, um durch die Zugkraft das Schaltmoment um den ersten Befestigungspunkt zum Ändern der Aktorstellung zu bewirken.

### Kurzbeschreibung der Zeichnungen

Ausführungsformen werden nachfolgend anhand der beigefügten Zeichnungen näher erläutert. Es zeigen:
- Figuren 1a und 1b: eine schematische Darstellung einer Aktorvorrichtung in einer ersten Aktorstellung und einer zweiten Aktorstellung;
- Figur 2: eine schematische Darstellung einer Aktorvorrichtung in einer weiteren Ausführungsform;
- Figuren 3a und 3b: eine weitere Aktorvorrichtung in einer ersten Aktorstellung und einer zweiten Aktorstellung; und
- Figuren 4a und 4b: eine weitere Aktorvorrichtung in einer ersten Aktorstellung und einer zweiten Aktorstellung;
- Figuren 5a und 5b: eine weitere Aktorvorrichtung in einer ersten Aktorstellung und einer zweiten Aktorstellung;
- Figuren 6a und 6b: eine weitere Aktorvorrichtung in einer ersten Aktorstellung und einer zweiten Aktorstellung;
- Figur 7: eine schematische Darstellung eines Lagerungselements;
- Figuren 8a und 8b: eine weitere Aktorvorrichtung in einer Draufsicht und einer Querschnittsansicht; und
- Figuren 9a und 9b: eine weitere Aktorvorrichtung in einer Draufsicht und einer Querschnittsansicht.

### Beschreibung von Ausführungsformen

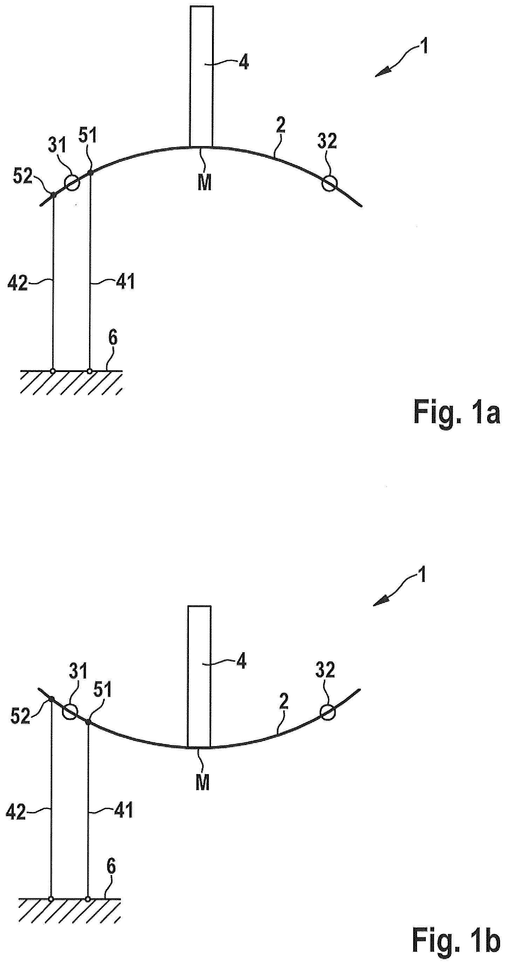

Figuren 1a und 1b zeigen eine Aktorvorrichtung in zwei Aktorstellungen. Die Aktorstellungen stellen bistabile Stellungen der Aktorvorrichtung dar, die ohne Zufuhr von Energie gehalten werden.

Die Aktorvorrichtung 1 weist ein flächiges Biegeelement 2 auf, das in Form eines Biegeplättchens oder einer Biegezunge aus einem elastischen Material ausgebildet sein kann. Das Biegeelement 2 kann insbesondere aus einem metallischen Material ausgebildet sein, das eine hohe Elastizität und Formsteifigkeit aufweist. Das Biegeelement 2 ist in der gezeigten Ausführungsform zwischen einem ersten und einem zweiten Befestigungspunkt 31, 32 so eingespannt, dass die zwischen den Befestigungspunkten 31, 32 liegende Länge des Biegeelements 2 bzw. Abschnitt des Biegeelements 2 größer ist als der Abstand der Befestigungspunkte 31, 32.

In der gezeigten Ausführungsform kann das Biegeelement 2 an beiden Befestigungspunkten 31, 32 schwenkbar gelagert sein, so dass sich aufgrund der höheren Länge des Biegeelements 2 zwischen den Befestigungspunkten 3 eine Verformung des Biegeelements 2 in einer ersten Aktorstellung (Figur 1a) oder in einer zweiten Aktorstellung (Figur 1b) ergibt. Das Biegeelement 2 dient so als Schaltelement, das in einer ersten Form/Verformung in einer ersten Aktorstellung und in einer zweiten Form/Verformung in eine zweite Aktorstellung gebracht werden kann, um z.B. ein mit dem Biegeelement 2 gekoppeltes Stellelement 4 von einer ersten in eine zweite Position oder umgekehrt zu versetzen.

Das Umschalten des Biegeelements 2 erfolgt durch Ausüben eines Schaltmoments nahe dem ersten Befestigungspunkt 31. Das Schaltmoment kann gemäß der Ausführungsform der Figuren 1a und 1b ausgeübt werden, indem ein erstes Aktorelement 41 an einem ersten Zugpunkt 51 an dem Biegeelement 2 und ein zweites Aktorelement 42 an einem zweiten Zugpunkt 52 des Biegeelements 2 befestigt ist. Das erste und zweite Aktorelement 41, 42 sind an ihren den Zugpunkten 51, 52 gegenüberliegenden Enden an einem z.B. ortsfesten Bauteil 6 fixiert.

Der erste und der zweite Zugpunkt 51, 52 sind aneinander bezüglich des ersten Befestigungspunktes 31 an gegenüberliegenden Abschnitten des Biegeelements 2 angeordnet. In der gezeigten Ausführungsform erfährt etwa die Mitte M des Biegeelements 2 zwischen den beiden Befestigungspunkten 31, 32 die größte Auslenkung, und es ist vorgesehen, dass der erste Zugpunkt 51 zwischen der Mitte des Biegeelements 2 und dem ersten Befestigungspunkt 31 angeordnet ist, mit einem Abstand von dem ersten Befestigungspunkt 31, der vorzugsweise maximal 25%, vorzugsweise zwischen 1 und 20%, besonders bevorzugt zwischen 2 und 5% des Abstands zwischen den beiden Befestigungspunkten 31, 32 beträgt. Auf diese Weise reicht eine geringe Auslenkung quer zu der Verbindungsstrecke zwischen den Befestigungspunkten 31, 32 am ersten Zugpunkt 51 aus, um eine Verformung des Biegeelements 2 in Richtung in die jeweils andere Aktorstellung zu bewirken.

Der Abstand der Zugpunkte 51, 52 von dem Befestigungspunkt 31 kann so gewählt sein, dass der Hub eines Stellelements 4, der durch die Verstellung zwischen den Aktorstellungen erreicht wird, um einen Faktor von mindestens 5, vorzugsweise von mindestens 10, größer ist als der Hub, der an dem Zugpunkt 51, 52 zum Wechsel zwischen den Aktorstellungen benötigt wird.

Die Aktorelemente 41, 42 sind als Formgedächtnisdrähte aus einem Formgedächtnismaterial, wie beispielsweise einer Formgedächtnislegierung, die an sich aus dem Stand der Technik bekannt sind, ausgebildet. Formgedächtnisdrähte können elastisch durch Dehnen verlängert werden und streben in ihren kürzeren Ausgangszustand, wenn diese erwärmt werden. Die Erwärmung des jeweiligen Aktorelements 41, 42 kann durch externe Wärmequellen oder durch einen das Aktorelement 41, 42 erwärmenden Stromdurchfluss durch den Formgedächtnisdraht erfolgen.

Wird ausgehend von der Aktorstellung der Figur 1a das erste Aktorelement 41 aktiviert, d.h. erwärmt, so verringert sich deren Länge und es wird eine Zugkraft auf den ersten Zugpunkt 51 ausgeübt. Sobald der Zugpunkt 51 ausreichend quer zu der Verbindungsstrecke zwischen den Befestigungspunkten 31, 32 ausgelenkt ist, verformt sich/springt das Biegeelement 2 in die zweite Aktorstellung, die in Figur 1b gezeigt ist. Dadurch wird durch die dann erreichten neuen Positionen der Zugpunkte 51, 52 das erste Aktorelement 41 schnell entlastet und gleichzeitig das zweite Aktorelement 42 gedehnt, da der dem ersten Befestigungspunkt 31 gegenüberliegende zweite Zugpunkt 52 sich quer zur Verbindungsstrecke zwischen den Befestigungspunkten 31, 32 in die entgegengesetzte Richtung bewegt.

Auf diese Weise kann das zweite Aktorelement 42 in einen gestreckten Zustand verbracht werden, in dem es verformt ist und bei einer Aktivierung, d.h. bei Erwärmung, aufgrund seiner Formgedächtniseigenschaft seine Länge verkürzen kann. Wenn das zweite Aktorelement 42 aktiviert wird, wird eine Zugkraft auf den zweiten Zugpunkt 52 im Wesentlichen in die gleiche Richtung wie zuvor beim ersten Zugpunkt 51 aufgebracht. Dadurch wird ein der vorherigen Situation entgegengesetztes Schaltmoment um den ersten Befestigungspunkt 31 bewirkt, durch das das Biegeelement 2 von der zweiten Aktorstellung (Figur 1b) wieder zurück in die erste Aktorstellung (Figur 1a) gebracht werden kann.

Im vorliegenden Ausführungsbeispiel sind die Zugpunkte 51, 52 an dem Biegeelement 2 angebracht, um das Biegeelement 2 an dem ersten Befestigungspunkt 31 mit einem Schaltmoment zu beaufschlagen.

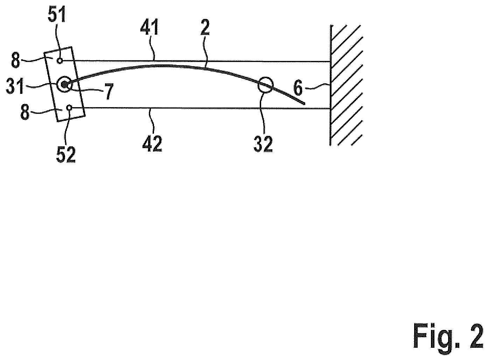

Alternativ kann, wie in Figur 2 gezeigt, das Biegeelement 2 mit einer drehbaren Welle 7 an dem ersten Befestigungspunkt 31 versehen sein, wodurch eine Drehachse des Verschwenkens gebildet wird. Alternativ kann die Drehachse auch durch das Biegeelement selbst gebildet sein, welches entsprechend eingespannt bzw. gelagert ist. Weiterhin kann die Welle 7 z.B. axial versetzt mit bezüglich der Welle 7 in verschiedenen Richtungen abstehenden, insbesondere einander gegenüberliegenden Zugschenkeln 8 versehen sein, an denen die Zugpunkte 51, 52 für die Aktorelemente 41, 42 angeordnet sind. Durch Ausüben einer Zugkraft über die Zugpunkte 51, 52 über die Aktorelemente 41, 42 kann ein entsprechendes Schaltmoment auf die Welle 7 ausgeübt werden.

Ein auf die Welle 7 durch die Aktorelemente 41, 42 ausgeübtes Schaltmoment kann dann zu Verformungen des Biegeelements 2 zwischen der ersten und zweiten Aktorstellung dienen. Dies ermöglicht es, die als Formgedächtnisdrähte ausgebildeten Aktorelemente 41, 42 sich in verschiedene Richtungen erstreckend anzuordnen, so dass ebenfalls ein platzsparender Aufbau realisiert werden kann. Insbesondere zeigt die Ausführungsform der Figur 2 eine Anordnung der Formgedächtnisdrähte parallel zu der Verbindungsstrecke zwischen dem ersten und zweiten Befestigungspunkt 31, 32, wobei die Aktorelemente 41, 42 an der an dem ersten Befestigungspunkt 31 angeordneten Welle 7 über entsprechende quer bzw. senkrecht, d.h. schräg oder rechtwinklig zur Richtung der Verbindungsstrecke zwischen den beiden Befestigungspunkten 31, 32 abstehenden Zugschenkeln 8 angreifen können. Dies ermöglicht einen besonders platzsparenden Aufbau der Aktorvorrichtung 1.

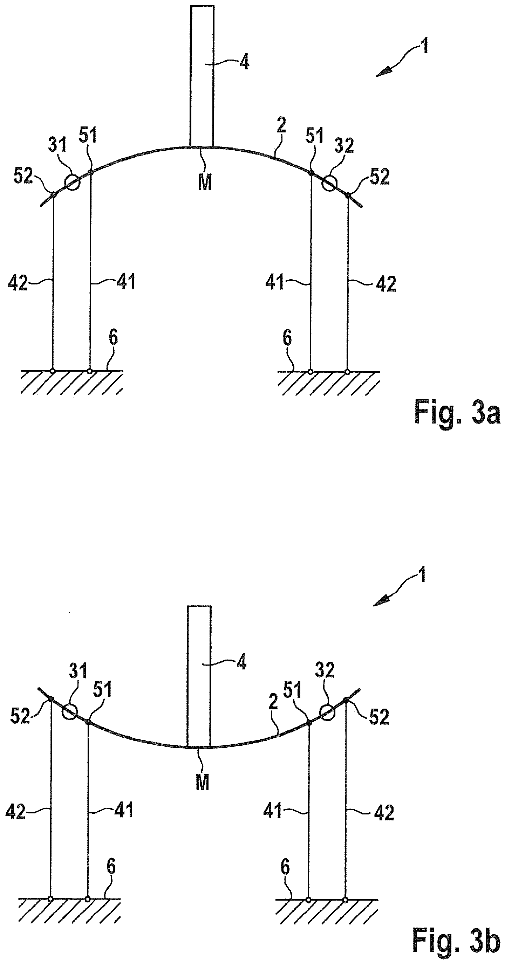

Wie in den Figuren 3a und 3b dargestellt, kann die Aktorvorrichtung nach Figur 1 auch über beide Befestigungspunkte 31, 32 mit jeweiligen gegeneinander gerichteten Schaltmomenten aktiviert werden, um so das an einem der Befestigungspunkte 31, 32 benötigte Schaltmoment zu reduzieren. Dies ermöglicht es, den Abstand zwischen den Zugpunkten 51, 52 und den jeweiligen Befestigungspunkten 31, 32 weiter zu verringern, um so den benötigten Aktorhub, d.h. die Länge zwischen dem gedehnten Zustand und dem nach dem Aktivieren erreichten Ausgangszustand der Aktorelemente 41, 42 weiter verringern zu können.

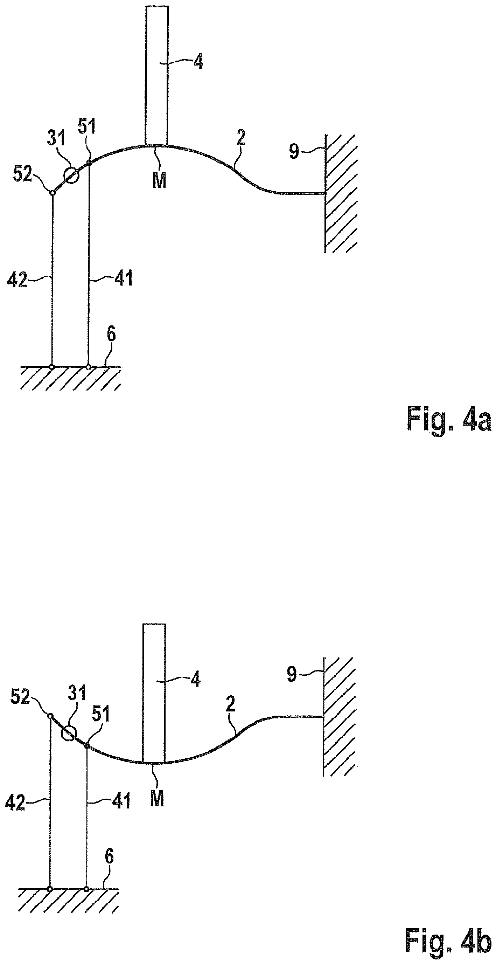

In den Figuren 4a und 4b ist eine weitere Ausführungsform der Aktorvorrichtung 1 dargestellt. Hierbei ist ein Ende des Biegeelements 2 an einer Haltevorrichtung 9 fixiert, d.h. die Lagerung des betreffenden Endes übt ein entsprechendes Haltemoment auf das Biegeelement 2 aus. Somit muss zum Bewirken einer Verformung des Biegeelements 2 ein Schaltmoment lediglich auf den ersten Befestigungspunkt 31 ausgeübt werden. Auf diese Weise kann, insbesondere in Verbindung mit der Ausführungsform der Figur 2, das Biegeelement 2 und die Enden der Aktorelemente 41,42, die den an den Zugschenkeln 8 angeordneten Zugpunkten 51, 52 gegenüberliegen, an einer gemeinsamen Haltevorrichtung befestigt werden, so dass eine konstruktiv einfache Ausgestaltung der Aktorvorrichtung 1 erreicht werden kann.

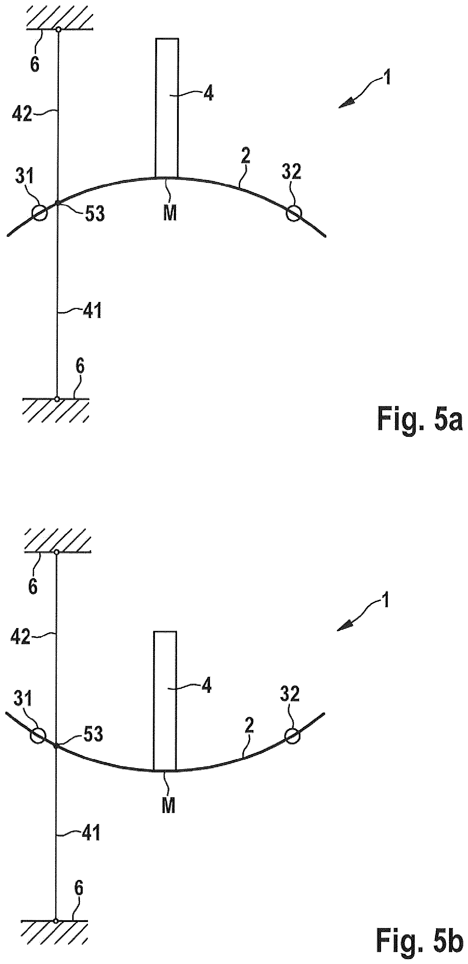

Die Figuren 5a und 5b zeigen eine weitere Aktorvorrichtung 1 in zwei Aktorstellungen. Im Unterschied zu der Ausführungsform der Figuren 1a und 1b sind die beiden Aktorelemente 41, 42 an einem gemeinsamen Zugpunkt 53 angeordnet. Die Aktorelemente 41, 42 können sich beispielsweise ausgehend von dem gemeinsamen Zugpunkt 53 an dem Biegeelement 2 in entgegengesetzte Richtungen erstrecken. Der gemeinsame Zugpunkt 53 kann wie gezeigt an dem Biegeelement 2 zwischen den Befestigungspunkten 31, 32 angeordnet sein. Alternativ kann der gemeinsame Zugpunkt 53 auch an dem Biegeelement 2 an einem an dem Befestigungspunkt 31, 32 überstehenden Abschnitt des Biegeelements 2 außerhalb des Abschnitts zwischen den Befestigungspunkten 31, 32 angeordnet sein.

Wie zuvor beschrieben, erfolgt das Umschalten des Biegeelements 2 durch ein Schaltmoment, das durch Ausüben einer Zugkraft nahe dem ersten Befestigungspunkt 31 bewirkt wird. Das Schaltmoment kann gemäß der Ausführungsform der Figuren 5a und 5b ausgeübt werden, indem das erste Aktorelement 41 an dem gemeinsamen Zugpunkt 53 an dem Biegeelement 2 und das zweite Aktorelement 42 ebenfalls an dem gemeinsamen Zugpunkt 53 des Biegeelements 2 befestigt ist. Das erste und zweite Aktorelement 41, 42 sind an ihren dem gemeinsamen Zugpunkt 53 gegenüberliegenden Enden an z.B. ortsfesten Bauteilen 6 fixiert. Die Aktorelemente 41, 42 können in verschiedene Richtungen bei deren Aktivierung Zugkräfte auf den Zugpunkt ausüben, vorzugsweise in einander entgegengesetzte Richtungen.

Der gemeinsame Zugpunkt 53 kann bezüglich des ersten Befestigungspunktes 31 in Richtung zu dem zweiten Befestigungspunkt 32 versetzt sein oder in einer dazu entgegengesetzten Richtung. Abgesehen von der unterschiedlichen Anordnung des ersten und des zweiten Aktorelements 41, 42 kann die Aktorvorrichtung 1 der Figuren 5a und 5b mit den Merkmalen der Ausführungsformen der Figuren 1 bis 4 versehen sein.

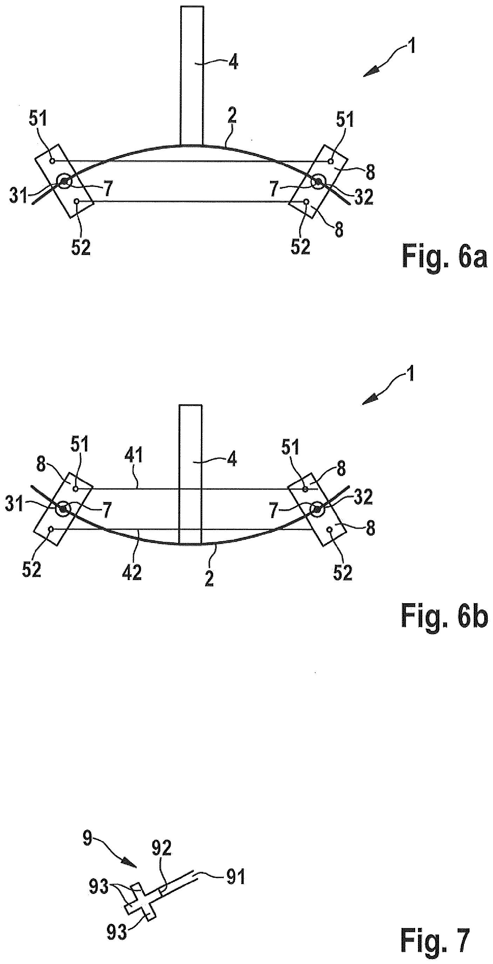

In den Figuren 6a und 6b ist eine weitere Ausführungsform einer Aktorvorrichtung 1 in zwei verschiedenen Aktorstellungen dargestellt, bei der das Biegeelement 2 an dem ersten und dem zweiten Befestigungspunkt 31, 32 in oben beschriebener Weise angeordnet und jeweils mit einer Welle 7 schwenkbar um eine entsprechende Drehachse gehalten ist. Die beiden Wellen 7 an den Befestigungspunkten 31, 32 können z.B. axial versetzt mit bezüglich der jeweiligen Welle 7 einander gegenüberliegenden Zugschenkeln 8 (die alternativ auch in verschiedenen Richtungen von der jeweiligen Welle 7 abstehen können), versehen sein, die radial von der Schwenkachse abstehen. An den Zugschenkeln 8 können die Zugpunkte 51, 52 für die Aktorelemente 41, 42 versetzt zu der Schwenkachse angeordnet sein. Durch Ausüben einer Zugkraft auf die Zugpunkte 51, 52 über die Aktorelemente 41, 42 kann ein entsprechendes Schaltmoment auf beide Wellen 7 ausgeübt werden. Im vorliegenden Ausführungsbeispiel sind zwei Aktorelemente 41, 42 so vorgesehen, dass das erste Aktorelement 41 zwischen den beiden ersten Zugpunkten 51 an den Zugschenkeln 8 der beiden Befestigungspunkte 31, 32 angeordnet ist und das zweite Aktorelement 42 zwischen den beiden zweiten Zugpunkten 52 an den Zugschenkeln 8 der beiden Befestigungspunkte 31, 32 angeordnet ist. Auf diese Weise können beim Aktivieren des ersten oder des zweiten Aktorelements 41, 42 zueinander entgegengesetzt gerichtete Schaltmomente an den Befestigungspunkten 31, 32 auf das Biegeelement 2 ausgeübt werden. Dabei ist eine Anbringung der den Zugpunkten gegenüberliegenden Enden der Aktorelemente 41, 42 an ortsfesten Bauteilen nicht notwendig.

Im vorliegenden Ausführungsbeispiel sind die Zugpunkte 51, 52 an dem Biegeelement 2 angebracht, um das Biegeelement 2 an dem ersten Befestigungspunkt 31 mit einem Schaltmoment zu beaufschlagen. Alternativ kann das Biegeelement 2 mit einer Welle 7 als Drehachse des Verschwenkens an dem ersten Befestigungspunkt 31 fest verbunden sein. Weiterhin kann wie in Figur 2 gezeigt die Welle 7 z.B. axial versetzt mit bezüglich der Welle 7 einander gegenüberliegenden Zugschenkeln 8 (alternativ auch in verschiedenen Richtungen von der Welle 7 abstehen können), versehen sein, an denen die Zugpunkte 51, 52 für die Aktorelemente 41, 42 angeordnet sind. Durch Ausüben einer Zugkraft über die Zugpunkte 51, 52 über die Aktorelemente 41, 42 kann ein entsprechendes Schaltmoment um die Drehachse ausgeübt werden.

In Figur 7 ist eine Darstellung eines Lagerelements 9 zur Lagerung des Biegeelements 2 an einem oder mehreren der Befestigungspunkte 31, 32, d.h. z.B. dem ersten und/oder an dem zweiten Befestigungspunkt 31, 32, dargestellt. Das Lagerelement 9 weist eine Aufnahmeöffnung 91 oder eine sonstige Halterung zur Aufnahme/ zum Befestigen eines Endes des Biegeelements 2 auf und ist mit einer Lagerung 92 versehen, um das Lagerelement 9 schwenkbeweglich an dem jeweiligen Befestigungspunkt 31, 32 zu halten. Die Lagerung 92 kann die Welle 7 als Drehachse aufweisen. Versetzt, vorzugsweise gegenüber der Aufnahmeöffnung 91, ist ein nicht elastisches Übertragungselement 93 mit der Lagerung 92 verbunden, um einen oder mehrere Zugpunkte zum Anbringen der Aktorelemente 41, 42 bereitzustellen. Das Übertragungselement 93 kann in Form eines Zugschenkels ausgebildet sein. Das Übertragungselement 93 dient zum Bewirken des Schaltmoments im Bereich des jeweiligen Befestigungspunktes, das über die Aufnahmeöffnung 91 /sonstige Halterung auf das Biegeelement 2 übertragen werden kann.

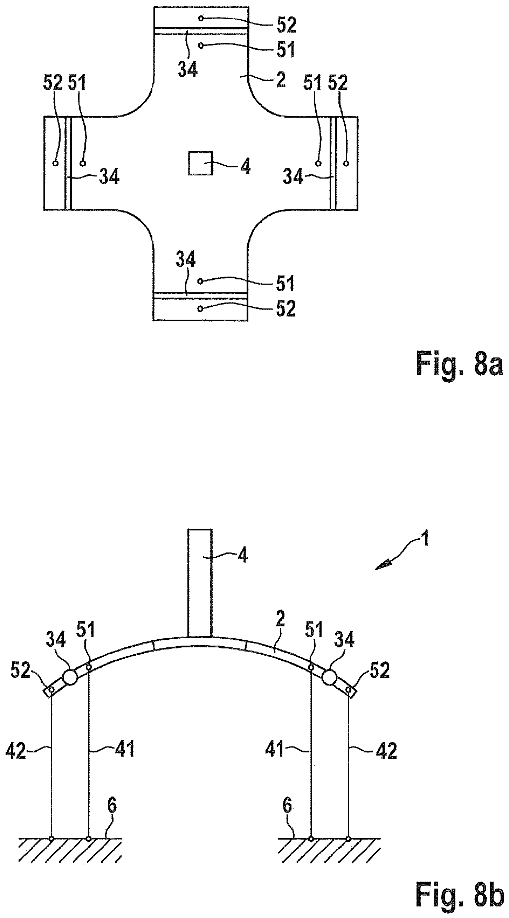

Die Figuren 8a und 8b zeigen eine weitere Ausführungsform der Aktorvorrichtung 1 in einer Draufsicht und einer Seitenansicht. Die Aktorvorrichtung 1 nach der Ausführungsform der Figuren 8a und 8b weist ein Biegeelement 2 auf, das mehr als zwei Befestigungspunkte 34 aufweist. Im vorliegenden Ausführungsbeispiel ist das Biegeelement 2 kreuzförmig und an vier Befestigungspunkten 34 schwenkbar gelagert, so dass sich zwei Aktorstellungen ergeben, eine erste Aktorstellung, bei der die Mitte des Biegeelements 2 quer bzw. senkrecht zur Ebene der Befestigungspunkte nach oben, und eine zweite Aktorstellung, bei der die Mitte des Biegeelements 2 quer bzw. senkrecht zur Ebene der Befestigungspunkte 34 nach unten ausgelenkt ist. Analog können an einem, mehreren oder allen Befestigungspunkten 34 entsprechend ein oder mehrere Aktorelemente (nicht gezeigt) in einer der oben beschriebenen Arten angeordnet sein, um ein Schaltmoment auf das Biegeelement 2 auszuüben.

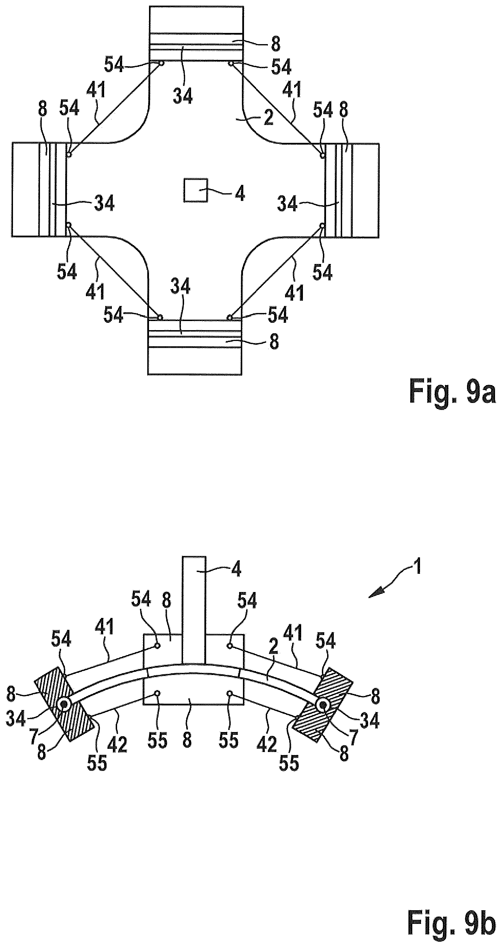

Die Figuren 9a und 9b zeigen eine Variante der Aktorvorrichtung 1 der Figuren 8a und 8b in einer Draufsicht und einer Seitenansicht. Das Biegeelement 2 ist wie zuvor beschrieben zwischen vier Befestigungspunkten 34 eingespannt und dort über jeweilige Wellen 7 als Drehachse schwenkbar gelagert. Quer bzw. senkrecht, d.h. schräg oder rechtwinklig zur Erstreckungsrichtung des Biegeelements 2 an jedem Befestigungspunkt 34 stehen zwei Zugschenkel 8 an jedem Befestigungspunkt 34 in verschiedenen, insbesondere einander entgegengesetzten Richtungen ab.

Die Aktorelemente 41, 42 sind zwischen Zugpunkten an den Zugschenkeln 8 angebracht, wobei die Zugpunkte 54, 55 einen Abstand zu den durch die Wellen 7 gebildete Schwenkachsen darstellen. Insbesondere können wie in den Figuren 9a und 9b dargestellt, die Aktorelemente 41, 42 jeweils zwischen zwei Zugpunkten 54, 55 angeordnet sein, die in gleicher Richtung zu der Welle 7 versetzt angeordnet sind. Weiterhin können sich die Zugpunkte 54, 55 an Zugschenkeln 8 befinden, die in Umfangsrichtung an benachbarten Befestigungspunkten 34 angeordnet sind. Auf diese Weise greifen an jedem Schenkel 8 eines Befestigungspunktes 34 zwei Aktorelemente an, die an demselben oder an zwei verschiedenen (in Richtung der Schwenkachse der jeweils zugeordneten Welle 7 versetzten) Zugpunkten angreifen können.

Anstelle der Wellen 7 können in den beschriebenen Ausführungsformen auch entsprechend gelagerte Achsen vorgesehen sein.

Gemäß einer weiteren Ausführungsform können die Aktorelemente 41, 42 jeweils auch als einteiliger oder mehrteiliger umlaufender Formgedächtnisdraht ausgebildet sein, der die Zugpunkte 54 bzw. 55 in in Umfangsrichtung des Biegeelements 2 umlaufender Weise miteinander verbindet. Um eine gleichmäßige Zugverteilung zu erreichen, kann der Formgedächtnisdraht an zumindest einigen der jeweiligen Zugpunkte 54, 55 verschiebbar angeordnet sein.

## Patentansprüche

1. Bistabile Aktorvorrichtung (1) zum Bereitstellen von mindestens zwei Aktorstellungen, umfassend:
- ein elastisches Biegeelement (2), das zumindest an einem Befestigungspunkt (31, 32, 34) so gehalten ist, dass durch Ausüben eines Schaltmoments an dem Befestigungspunkt (31, 32, 34) eine elastische bistabile Verformung des Biegeelements (2) zu einem Wechsel von einer ersten Aktorstellung in eine zweite Aktorstellung führt; und
- mindestens ein Aktorelement (41, 42), das mit einem Formgedächtnisdraht ausgebildet ist, wobei der Formgedächtnisdraht durch Erwärmen eine Zugkraft bewirkt und so mit einem Abschnitt des Biegeelements (2) an dem Befestigungspunkt (31, 32, 34) gekoppelt ist, dass durch die Zugkraft das Schaltmoment an dem Befestigungspunkt (31, 32, 34) bewirkt wird, um das Biegeelement (2) von der ersten Aktorstellung in die zweite Aktorstellung zu bewegen.
**dadurch gekennzeichnet, dass**
das Biegeelement (2) an mindestens einem von mehreren Befestigungspunkten (31, 32) schwenkbar um eine Drehachse oder an einer Welle (7), gelagert ist, wobei an dem einen Befestigungspunkt (31, 32) mindestens ein Aktorelement (41, 42) an einem an der Drehachse bzw. der Welle (7), angeordneten, insbesondere quer bzw. senkrecht zu einer axialen Richtung der Drehachse bzw. der Welle (7), abstehenden Zugschenkel (8) angreift, so dass durch Ausüben einer Zugkraft durch eines der Aktorelemente (41, 42) das Schaltmoment an dem betreffenden Befestigungspunkt (31, 32) um die Drehachse bzw. auf die Welle (7), ausgeübt wird.

2. Aktorvorrichtung (1) nach Anspruch 1, wobei ein weiteres Aktorelement (41, 42) so mit einem Abschnitt des Biegeelements (2) an dem Befestigungspunkt (31, 32, 34) gekoppelt ist, dass durch die Zugkraft ein Schaltmoment an dem oder einem weiteren Befestigungspunkt (31, 32, 34) bewirkt wird, um das Biegeelement (2) von der zweiten Aktorstellung in die erste Aktorstellung zu bewegen.

3. Aktorvorrichtung (1) nach Anspruch 1 oder 2, wobei das elastische Biegeelement (2) aus einem elastischen metallischen Material ausgebildet ist, wobei das Biegeelement (2) zwischen dem ersten Befestigungspunkt (31) und einem zweiten Befestigungspunkt (32) mit einer Länge angeordnet ist, die größer ist als der Abstand zwischen dem ersten Befestigungspunkt (31) und dem zweiten Befestigungspunkt (32).

4. Aktorvorrichtung (1) nach Anspruch 1, wobei sich der mindestens eine Zugschenkel (8) quer bzw. senkrecht zu dem Biegeelement (2) und/oder das mindestens eine Aktorelement (41, 42) parallel zu der Verbindungsstrecke zwischen zwei der mehreren Befestigungspunkten (31, 32) erstrecken.

5. Aktorvorrichtung (1) nach Anspruch 1 oder 4, wobei das Biegeelement (2) an mindestens zwei Befestigungspunkten (31, 32) schwenkbar um eine Drehachse oder an einer jeweiligen Welle (7), gelagert ist, wobei an jedem der mindestens zwei Befestigungspunkte (31, 32) zwei bezüglich der Drehachse bzw. bezüglich der Welle (7), in verschiedenen Richtungen abstehenden, insbesondere einander gegenüberliegend angeordneten Zugschenkel (8), die quer bzw. senkrecht zu der Drehachse bzw. zu einer axialen Richtung der Welle (7), abstehen, angeordnet sind, wobei die Zugschenkel (8) jeweils Zugpunkte (51, 52) aufweisen, wobei mindestens ein Aktorelement (41, 42) zwischen zwei Zugpunkten (51, 52) an Zugschenkeln (8) verschiedener Befestigungspunkte (31, 32) angebracht ist, so dass durch Ausüben einer Zugkraft durch das mindestens eine Aktorelement (41, 42) zueinander entgegengesetzt gerichtete Schaltmomente an den mindestens zwei Befestigungspunkten (31, 32) um die jeweilige Drehachse bzw. auf die jeweilige Welle (7), ausgeübt werden.

6. Aktorvorrichtung (1) nach Anspruch 5, wobei das Biegeelement (2) an vier Befestigungspunkten (34) schwenkbar um eine jeweilige Drehachse oder an einer jeweiligen Welle (7), gelagert ist, wobei mindestens ein Aktorelement (41, 42) zwischen zwei Zugpunkten (54, 55) an Zugschenkeln (8) verschiedener in Umfangsrichtung der flächigen Erstreckung des Biegeelement (2) benachbarten Befestigungspunkten (34) angebracht ist, so dass durch Ausüben einer Zugkraft durch das mindestens eine Aktorelement (41, 42) zueinander entgegengesetzt gerichtete Schaltmomente an den durch das mindestens eine Aktorelement (41, 42) miteinander verbundenen Befestigungspunkten (34) um die jeweilige Drehachse bzw. auf die jeweilige Welle (7), ausgeübt werden.

7. Aktorvorrichtung (1) nach Anspruch 6, wobei mindestens eines der als Formgedächtnisdraht ausgebildeten Aktorelemente (41, 42) die Zugspunkte 54 bzw. 55 in in Umfangsrichtung des Biegeelements 2 umlaufender Weise miteinander verbindet.

8. Aktorvorrichtung (1) nach einem der Ansprüche 1 bis 7, wobei mindestens zwei Aktorelemente (41, 42) als Antagonist-Protagonist-Anordnung so ausgelegt sind, dass bei Ausüben einer Zugkraft durch eines der Aktorelemente (41, 42), das jeweils andere Aktorelement (41, 42) gedehnt wird.

9. Aktorvorrichtung (1) nach einem der Ansprüche 1 bis 8, wobei das mindestens eine Aktorelement (41, 42) mit einer elektrischen Stromquelle verbunden ist, um eine Erwärmung durch Bestromung zu erreichen.

10. Verfahren zum Betreiben der bistabilen Aktorvorrichtung (1) nach einem der Ansprüche 1 bis 9 mit mindestens zwei Aktorelementen (41, 42), wobei der Formgedächtnisdraht der Aktorelemente (41, 42) zum Ausüben des Schaltmoments wechselweise erwärmt wird, um durch die Zugkraft das Schaltmoment an dem Befestigungspunkt (31, 32, 34) zum Ändern der Aktorstellung zu bewirken.

## Claims

1. Bistable actuator device (1) for providing at least two actuator positions, comprising:
- an elastic bending element (2) which is held at least at one attachment point (31, 32, 34) in such a way that, by exerting a switching torque at the attachment point (31, 32, 34), an elastic bistable deformation of the bending element (2) results in a change from a first actuator position to a second actuator position; and
- at least one actuator element (41, 42) formed with a shape memory wire, the shape memory wire causing a pulling force by heating and being coupled to a portion of the bending element (2) at the attachment point (31, 32, 34) such that the pulling force causes the switching torque at the attachment point (31, 32, 34) to move the bending element (2) from the first actuator position to the second actuator position,
**characterized in that**
the bending element (2) is mounted at at least one of a plurality of attachment points (31, 32) so as to be pivotable about an axis of rotation or on a shaft (7), wherein at the one attachment point (31, 32) the at least one actuator element (41, 42) engages a pulling leg (8) which is arranged on the axis of rotation or the shaft (7) and projects in particular transversely or perpendicularly to an axial direction, so that by exerting a pulling force by one of the actuator elements (41, 42) the switching torque is exerted at the respective attachment point (31, 32) about the axis of rotation or onto the shaft (7).

2. Actuator device (1) according to claim 1, wherein a further actuator element (41, 42) is coupled to a section of the bending element (2) at the attachment point (31, 32, 34) in such a way that the pulling force causes a switching torque at the or at a further attachment point (31, 32, 34) in order to move the bending element (2) from the second actuator position into the first actuator position.

3. Actuator device (1) according to claim 1 or 2, wherein the elastic bending element (2) is formed of an elastic metallic material, wherein the bending element (2) is arranged between the first attachment point (31) and a second attachment point (32) with a length which is larger than the distance between the first attachment point (31) and the second attachment point (32).

4. Actuator device (1) according to claim 1, wherein the at least one pulling leg (8) extends transversely or perpendicularly with respect to the bending element (2) and/or to the at least one actuator element (41, 42) in parallel to the connecting line between two of the plurality of attachment points (31, 32).

5. Actuator device (1) according to claim 1 or 4, wherein the bending element (2) is mounted at at least two attachment points (31, 32) so as to be pivotable about an axis of rotation or on a respective shaft (7), wherein at each of the at least two attachment points (31, 32) two pulling legs (8) are arranged which project transversely or respectively perpendicularly in different directions with respect to the axis of rotation or with respect to the shaft (7), in particular in opposite directions, wherein the pulling legs (8) each have pulling points (51, 52), wherein at least one actuator element (41, 42) is mounted between two pulling points (51, 52) on the pulling legs (8) of different attachment points (31, 32), so that by exerting a pulling force by the at least one actuator element (41, 42), switching torques directed oppositely to one another are produced at the at least two attachment points (31, 32) about the respective axis of rotation or onto the respective shaft (7), respectively.

6. Actuator device (1) according to claim 5, wherein the bending element (2) is mounted at four attachment points (34) so as to be pivotable about a respective axis of rotation or on a respective shaft (7), wherein at least one actuator element (41, 42) is mounted between two pulling points (54, 55) on pulling legs (8) of different attachment points (34) adjacent in the circumferential direction of the planar extension of the bending element (2), so that, by exertion of a pulling force by the at least one actuator element (41, 42), switching torques directed in opposite directions to one another are applied to the attachment points (34), which are connected to one another by the at least one actuator element (41, 42), about the respective axis of rotation or, respectively, onto the respective shaft (7).

7. Actuator device (1) according to claim 6, wherein at least one of the actuator elements (41, 42) made of a shape memory wire connects the pulling points (54, 55) with each other thereby surrounding the bending element (2) in a circumferential direction.

8. Actuator device (1) according to one of claims 1 to 7, wherein at least two actuator elements (41, 42) are configured as an antagonist-protagonist arrangement in such a way that when a pulling force is exerted by one of the actuator elements (41, 42), the respective other actuator element (41, 42) is stretched.

9. Actuator device (1) according to any one of claims 1 to 8, wherein the at least one actuator element (41, 42) is connected to an electric power source for heating by energization.

10. Method of operating the bistable actuator device (1) according to any one of claims 1 to 9 with at least two actuator elements (41, 42), wherein the shape memory wire of the actuator elements (41, 42) is alternately heated for exerting the switching torque in order to cause the switching torque at the attachment point (31, 32, 34) for changing the actuator position by the pulling force.

## Revendications

1. Dispositif d'actionnement bistable (1) pour fournir au moins deux positions d'actionnement, comprenant :
- un élément de flexion élastique (2) qui est maintenu au moins à un point de fixation (31, 32, 34) de telle sorte que, en exerçant un couple de commutation au point de fixation (31, 32, 34), une déformation élastique bistable de l'élément de flexion (2) conduit à un changement d'une première position d'actionneur à une deuxième position d'actionneur ; et
- au moins un élément actionneur (41, 42) formé avec un fil à mémoire de forme, le fil à mémoire de forme provoquant une force de traction par chauffage et étant couplé à une partie de l'élément de flexion (2) au niveau du point de fixation (31, 32, 34) de sorte que la force de traction provoque le couple de commutation au niveau du point de fixation (31, 32, 34) pour déplacer l'élément de flexion (2) de la première position d'actionneur à la seconde position d'actionneur.
**caractérisé en ce que**
l'élément de flexion (2) est monté sur au moins un de plusieurs points de fixation (31, 32) de manière à pouvoir pivoter autour d'un axe de rotation ou sur un arbre (7), au moins un élément d'actionnement (41, 42) étant monté au niveau d'un point de fixation (31, 32) sur une branche de traction (8) disposé sur l'axe de rotation ou l'arbre (7), en particulier transversalement ou perpendiculairement à une direction axiale de l'axe de rotation ou de l'arbre (7), de sorte que, en exerçant une force de traction par l'un des éléments d'actionnement (41, 42), le couple de commutation est exercé au point de fixation pertinent (31, 32) autour de l'axe de rotation ou sur l'arbre (7).

2. Dispositif d'actionnement (1) selon la revendication 1, dans lequel un autre élément d'actionnement (41, 42) est couplé à une partie de l'élément de flexion (2) au niveau du point de fixation (31, 32, 34) de telle sorte que la force de traction provoque un couple de commutation au niveau du ou d'un autre point de fixation (31, 32, 34) afin de déplacer l'élément de flexion (2) de la deuxième position d'actionnement à la première position d'actionnement.

3. Dispositif d'actionnement (1) selon la revendication 1 ou 2, dans lequel l'élément de flexion élastique (2) est formé d'un matériau métallique élastique, dans lequel l'élément de flexion (2) est disposé entre le premier point de fixation (31) et un deuxième point de fixation (32) avec une longueur qui est supérieure à la distance entre le premier point de fixation (31) et le deuxième point de fixation (32).

4. Dispositif d'actionnement (1) selon la revendication 1, dans lequel l'au moins une branche de traction (8) s'étend transversalement ou perpendiculairement à l'élément de flexion (2) et/ou l'au moins un élément d'actionnement (41, 42) s'étend parallèlement au connexion entre deux de la pluralité de points de fixation (31, 32).

5. Dispositif d'actionnement (1) selon la revendication 1 ou 4, dans lequel l'élément de flexion (2) est monté en au moins deux points de fixation (31, 32) de manière à pouvoir pivoter autour d'un axe de rotation ou sur un arbre (7) respectif, dans lequel, à chacun des au moins deux points de fixation (31, 32), deux branches de traction (8) font saillie dans des directions différentes par rapport à l'axe de rotation ou par rapport à l'arbre (7), en particulier sont disposées à l'opposé l'une de l'autre et s'étendent transversalement ou perpendiculairement à l'axe de rotation ou à une direction axiale de l'arbre (7), dans lequel les branches de traction (8) présentent chacune des points de traction (51, 52), dans lequel au moins un élément d'actionnement (41, 42) est monté entre deux points de traction (51, 52) sur des branches de traction (8) de différents points de fixation (31, 32), de sorte qu'en exerçant une force de traction au moyen de l'au moins un élément d'actionnement (41, 42), des couples de commutation dirigés dans des directions opposées les unes aux autres sont exercés sur les au moins deux points de fixation (31, 32) autour de l'axe de rotation respectif ou, respectivement, sur l'arbre respectif (7).

6. Dispositif d'actionnement (1) selon la revendication 5, dans lequel l'élément de flexion (2) est monté en quatre points de fixation (34) de manière à pouvoir pivoter autour d'un axe de rotation respectif ou sur un arbre respectif (7), dans lequel au moins un élément d'actionnement (41, 42) est monté entre deux points de traction (54, 55) sur des branches de traction (8) de différents points de fixation (34) adjacents dans la direction circonférentielle de l'extension plane de l'élément de flexion (2), de sorte que, par l'exercice d'une force de traction par l'au moins un élément d'actionnement (41, 42), des couples de commutation dirigés de manière opposée l'un à l'autre sur les points de fixation (34), qui sont reliés entre eux par l'au moins un élément d'actionnement (41, 42), autour de l'axe de rotation respectif ou, respectivement, autour de l'arbre respectif (7), sont appliqués à l'au moins un élément d'actionnement (41, 42). sur l'arbre correspondant (7).

7. Dispositif d'actionnement (1) selon la revendication 6, dans lequel au moins l'un des éléments d'actionnement (41, 42) réalisé sous la forme d'un fil de mémoire de forme relie les points de traction 54 ou 55 les uns aux autres en tournant dans la direction circonférentielle de l'élément de flexion (2).

8. Dispositif d'actionnement (1) selon l'une des revendications 1 à 7, dans lequel au moins deux éléments d'actionnement (41, 42) sont conçus comme un agencement antagoniste-protagoniste de telle sorte que, lorsqu'une force de traction est exercée par l'un des éléments d'actionnement (41, 42), l'autre élément d'actionnement respectif (41, 42) est étiré.

9. Dispositif d'actionnement (1) selon l'une quelconque des revendications 1 à 8, dans lequel l'au moins un élément d'actionnement (41, 42) est connecté à une source de courant électrique pour réaliser un chauffage par excitation.

10. Procédé d'exploitation du dispositif d'actionnement bistable (1) selon l'une quelconque des revendications 1 à 9 avec au moins deux éléments d'actionnement (41, 42), dans lequel le fil à mémoire de forme des éléments d'actionnement (41, 42) est chauffé alternativement pour exercer le couple de commutation afin de provoquer le couple de commutation au point de fixation (31, 32, 34) pour modifier la position de l'actionneur par la force de traction.
